# FASCICULE DE BREVET EUROPEEN

(11) **EP 2 737 194 B1**
(45) Date de publication et mention de la délivrance du brevet: **27.05.2015**
(21) Numéro de dépôt: 12743519.6
(22) Date de dépôt: 17.07.2012
(51) Int. Cl.: F04D 29/40, F02K 1/80, F01D 25/24

(54) **DISPOSITIF DE LIAISON D'UN CADRE AVANT À UN CARTER DE SOUFFLANTE**
VORRICHTUNG ZUR VERBINDUNG EINES FRONTRAHMENS MIT EINEM LÜFTERGEHÄUSE
DEVICE FOR CONNECTING A FRONT FRAME TO A FAN CASING

(30) Priorité: 25.07.2011 FR 1156751
(43) Date de publication de la demande: 04.06.2014
(73) Titulaire: Aircelle, 76700 Gonfreville L'Orcher (FR)
(72) Inventeur: BILLAULT, Romain, F-76290 Montivilliers (FR)
(74) Mandataire: Gaillarde, Frédéric F. Ch.
(86) Numéro de dépôt international: PCT/FR2012/051692
(87) Numéro de publication internationale: WO 2013/014365

(56) Documents cités:
- EP-A1- 1 605 152
- FR-A1- 2 907 098
- FR-A1- 2 952 908
- GB-A- 2 384 827
- US-A1- 2011 070 078

## Description

La présente invention se rapporte à un dispositif de liaison d'un cadre avant d'inverseur de poussée à un carter de soufflante ou autre jonctions de même type, et à une nacelle incorporant un tel dispositif.

Comme cela est connu en soi, un ensemble propulsif d'aéronef comprend classiquement un turboréacteur logé à l'intérieur d'une nacelle.

La nacelle présente généralement une structure tubulaire comprenant une entrée d'air en amont du turboréacteur, une section médiane destinée à entourer une soufflante du turboréacteur et son carter, une section aval destinée à entourer la chambre de combustion du turboréacteur et abritant le cas échéant des moyens d'inversion de poussée. Elle peut être terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation (inverseur à portes pivotantes) ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

Afin de supporter les capots mobiles d'inversion et de lier la section aval au reste de la nacelle et notamment à la section médiane par l'intermédiaire du carter de soufflante, la section aval comprend des éléments fixes et notamment des poutres longitudinales liées en amont à un ensemble sensiblement annulaire appelé cadre avant, formé en une ou plusieurs parties entre lesdites poutres longitudinales, et destiné à être fixé à la périphérie du bord aval du carter de la soufflante du moteur.

Ce cadre avant est lié au carter de soufflant par des moyens de fixation généralement de type couteau / gorge comprenant une bride sensiblement annulaire, réalisée en une ou plusieurs, partie, solidaire du cadre avant et venant coopérer avec une rainure en forme de J ou de V. L'ensemble de fixation est couramment désigné sous le terme J-Ring.

Plus généralement les parties de la section arrière qui sont maintenues fixes en vol, à savoir la structure interne mais également la structure externe de la section aval, sont généralement liées à la section médiane ou au carter de soufflante par l'intermédiaire d'un tel système de bridage de type couteau / gorge.

L'arrière plan technologique est illustré par le document GB 2 384 827.

Un tel dispositif fonctionne pour des nacelles dites à conduit en C ou en D (D-duct ou C-duct) c'est-à-dire dont la structure aval est réalisée sous la forme de deux demi-parties, sensiblement hémicylindrique, montées de manière à pouvoir, notamment lors d'opération de maintenance, être ouvertes « en papillon » par pivotement autour d'une ligne charnière sensiblement longitudinal située à proximité d'un pylône de liaison à un aéronef.

Dans une telle configuration, une liaison de type couteau / gorge est bien évidemment extrêmement avantageuse, puisque tout en assurant une tenue longitudinale, ce type de liaison permet une extraction relativement aisée du couteau ou de la gorge selon une direction radiale lors de l'ouverture des demi-parties.

Récemment, des nacelles présentant d'autres configurations ont été développées et notamment des nacelles dites de type O-Duct. De telles nacelles ne possèdent pas deux demi-parties sensiblement hémicylindriques, mais un seul capot sensiblement périphérique et de forme quasi annulaire.

Dans une telle configuration, l'ouverture de la section aval ne s'effectue plus par pivotement autour d'une ligne charnière, mais par coulissement le long de rails de guidage disposés de part et d'autre du pylône de rattachement.

Une telle nacelle est décrite notamment dans les documents FR 2 907 098, FR 2 911 372, et FR 2 952 908.

Un dispositif de liaison de type couteau / gorge n'est alors plus adapté à ce type de nacelles dites O-Duct dans lequel la partie arrière est apte à coulisser lors des opérations de maintenance (nacelle dite à conduit en O ou O-duct) vers l'arrière de la nacelle selon une direction sensiblement longitudinale de cette dernière.

En effet, dans une telle configuration de nacelle, il conviendrait de prévoir un ou plusieurs quartiers de la section aval s'ouvrant latéralement de manière à pouvoir écarter la bride des gorges et libérer le cadre avant du carter. Cela réduit l'intérêt présenté par une

Une solution à ce type de problème a été décrite dans la demande FR 11/50296 non encore publiée.

La présente invention vise à pallier les inconvénients ci-dessus mentionnés et à fournir un système de liaison alternatif ou complémentaire à celui décrit dans la demande FR 11/50296. Un tel système doit assurer la transmission des efforts tout en étant aisément et rapidement désengageable et le moins couteux possible.

Pour ce faire, la présente invention se rapporte à un dispositif de liaison notamment d'un cadre avant d'une section aval d'une nacelle de turboréacteur à un carter de soufflante, comprenant au moins un pion de verrouillage relié à une première bride d'assemblage solidaire du cadre avant ou du carter de soufflante, ledit pion de verrouillage présentant une tige conçue pour traverser de manière extractible un orifice correspondant d'une deuxième bride d'assemblage solidaire du carter de soufflante ou du cadre avant,

caractérisé en ce que le dispositif de liaison comprend au moins une bride de retenue montée mobile entre une position de verrouillage et une position de déverrouillage et présentant au moins une ouverture destinée à être traversée par la tige du pion de verrouillage et à coopérer avec une gorge périphérique d'extrémité dudit pion de verrouillage, ladite ouverture étant pour ce faire configurée de manière à ce que, lorsque la bride de retenue est en position de déverrouillage, l'ouverture présente au niveau du pion des dimensions supérieures à celles de la tige du pion permettant ainsi son extraction de la deuxième bride d'assemblage, et lorsque la bride de retenue est en position de verrouillage, ladite ouverture présente au niveau du pion des dimensions supérieures à l'épaisseur du pion au niveau de sa gorge périphérique mais inférieure à l'épaisseur globale de la tige au niveau de l'orifice de la deuxième bride, empêchant ainsi son extraction.

Ainsi en utilisant des pions de verrouillage, le dispositif de liaison selon l'invention permet une retenue et un dégagement axiale compatible avec une nacelle de type dit O-duct prévoyant un déverrouillage selon une direction longitudinale de la nacelle.

Ce type de verrouillage autorise par ailleurs, un engagement et désengagement rapide par simple déplacement de la bride de retenue. Ce type de verrouillage permet également un serrage optimum des brides d'assemblage et permet de garantir une étanchéité optimale de la jonction.

Avantageusement, le pion de verrouillage est relié à la première bride d'assemblage au moyen d'une queue de fixation traversant un orifice correspondant de la première bride et maintenue par un moyen de retenue de type écrou.

De manière préférentielle, l'orifice de la première bride traversé par la queue de fixation du pion de verrouillage est équipé d'au moins une rondelle élastique servant de moyen de prétensionnement.

Selon une variante de réalisation, la queue de fixation forme une tige du pion et en ce que le moyen de retenue est une bride de retenue mobile conforme à la revendication 1.

De manière préférentielle, le dispositif comprend une pluralité de pions de verrouillage répartis sur la périphérie des brides d'assemblage.

Préférentiellement, au moins une bride d'assemblage est au moins partiellement annulaire.

Avantageusement, la bride de retenue est au moins partiellement annulaire.

Bien évidemment, en fonction des conceptions de nacelle, les brides d'assemblage et / ou bride de retenue, peuvent être sectorisées, partiellement périphériques, etc ...

De manière avantageusement complémentaire, le dispositif comprend des moyens de centrage des brides d'assemblage.

Avantageusement, la bride de retenue est associée à des moyens d'entraînement, notamment de type crémaillère et pignon.

De manière avantageuse, l'orifice de la bride de retenue présente une bordure d'épaisseur variable formant au moins une rampe apte à forcer le rapprochement des brides d'assemblage lors du passage de la bride de retenue de sa position de déverrouillage à sa position de verrouillage.

La présente invention se rapporte également à un ensemble propulsif comprenant un turboréacteur logé à l'intérieur d'une nacelle, ladite nacelle comprenant une section aval rattachée à un carter de soufflante du turboréacteur à l'aide d'au moins un dispositif de liaison selon l'invention.

La présente invention sera mieux comprise à la lumière de la description détaillée qui suit en regard du dessin annexé dans lequel :
- les figures 1 et 2 sont des vues respectivement de face et en coupe transversale d'un dispositif de liaison selon l'invention en configuration de verrouillage,
- les figures 3 et 4 sont des vues respectivement de face et en coupe transversale du dispositif de liaison des figures 1 et 2 en configuration déverrouillée,

Une nacelle constitue un logement tubulaire pour un turboréacteur et comprend de manière générale, une section amont d'entrée d'air, une section médiane entourant une soufflante du turboréacteur et une section aval 100 entourant une chambre de combustion du turboréacteur.

Plus précisément, la section médiane entoure la soufflante et présente une paroi interne formée par un carter 200 de la soufflante.

La section aval 100 peut abriter un dispositif d'inversion de poussée disposé dans le prolongement d'une section amont de rattachement au reste de la nacelle et notamment à la section médiane. Dans le cas d'une nacelle dite lisse, sans dispositif d'inversion de poussée, il n'y aura qu'une section amont de rattachement couvrant toute la section aval 100.

Comme indiqué dans le préambule de la présente invention, il importe de pouvoir fixer de manière résistante la section aval à la section médiane. Selon la configuration de la nacelle, il importe de pouvoir rattacher la section aval et la section médiane de manière démontable autorisant notamment une ouverture par translation longitudinale de la section aval.

Le rattachement de la section aval 100 à la section médiane 200 s'effectue par l'intermédiaire d'un cadre avant 101, ledit cadre avant 101 assurant notamment le support du dispositif d'inversion de poussée le cas échéant, comprenant une bride d'assemblage 102 annulaire sensiblement périphérique.

Cette bride d'assemblage 102 du cadre avant 101 de la section aval 100 est destinée à être assemblée avec une bride d'assemblage 202 correspondante liée au carter de soufflante 200.

L'assemblage des deux brides d'assemblage 102, 202 est assuré par un dispositif de liaison selon l'invention.

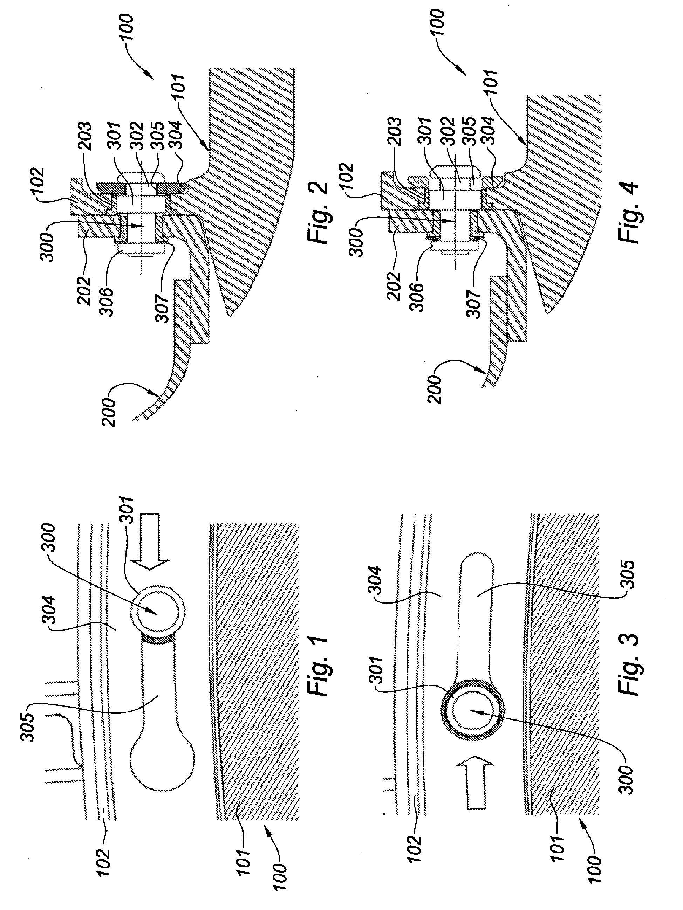

Conformément à l'invention, et comme représenté sur les figures 1 à 4, le dispositif de liaison comprend un ensemble de pions de verrouillage 300 reliés à la bride d'assemblage 202 du carter de soufflante 200, chaque pion de verrouillage 300 présentant une tige 301 traversant de manière extractible un orifice 203 correspondant de la bride d'assemblage 202 de la section aval 200.

La tige 301 du pion de verrouillage 300 présente en extrémité une gorge périphérique 302 dont le rôle sera expliqué ultérieurement.

Le rattachement du pion de verrouillage 300 à la bride d'assemblage 202 du carter de soufflante 200 s'effectue par l'intermédiaire d'une queue de fixation traversant un orifice correspondant de la bride d'assemblage 202 et maintenue par un moyen de retenue de type écrou 306.

Une rondelle élastique 307 est disposée entre l'écrou 306 et la bride d'assemblage 202 et sert de moyen de prétensionnement.

Cette rondelle peut bien évidemment être remplacée de manière équivalente par un ressort, hélicoïdal ou autre.

Alternativement, le rattachement du pion de verrouillage 300 à la bride d'assemblage 202 pourra s'effectuer de manière similaire au verrouillage selon l'invention qui va être maintenant décrit en détail.

Conformément à l'invention, le dispositif de liaison comprend une bride de retenue 304 apte à coopérer avec les pions de verrouillage 300.

La bride de retenue 304 présente une forme adaptée aux brides d'assemblage 102, 202 et est dans le cas présent de forme annulaire sensiblement périphérique.

Afin d'assurer le verrouillage, la bride de retenue 304 est montée mobile entre une position de verrouillage (figures 1 et 2) et une position de déverrouillage (figures 3 et 4). Le déplacement de la bride de retenue 304 sera obtenue par rotation de la bride, et pourra être effectué le cas échéant par des moyens d'entraînement motorisé, par exemple de type crémaillère et roue dentée.

Pour chaque pion de verrouillage 300, la bride de retenue 304 présente une ouverture 305 correspondante destinée à être traversée par la tige 301 du pion de verrouillage 300 et à coopérer avec la gorge périphérique 302 d'extrémité dudit pion de verrouillage 300.

Pour ce faire, l'ouverture 305 de la bride de retenue 305 est configurée de la manière suivante :
- lorsque la bride de retenue 304 est en position de déverrouillage, l'ouverture 305 présente au niveau du pion 300 des dimensions supérieures à celles de la tige 301 du pion 300 permettant ainsi son extraction de la bride d'assemblage 102 (et plus précisément, l'extraction de la bride d'assemblage 102 par recul de la section aval 200),
- lorsque la bride de retenue 304 est en position de verrouillage, ladite ouverture 305 présente au niveau du pion 300 des dimensions supérieures à l'épaisseur du pion 300 au niveau de sa gorge 302 périphérique mais inférieure à l'épaisseur globale de la tige 301 au niveau de l'orifice de la bride d'assemblage 202, empêchant ainsi son extraction.

Comme visible de face sur les figures 1 et 3, un exemple de configuration d'ouverture 305 adapté est une ouverture en forme de « trou de serrure », présentant une ouverture large, sensiblement circulaire, permettant le passage du pion 300 et prolongée latéralement par une ouverture longitudinal présentant une largeur réduite inférieure à la largeur maximale de la tige 301 du pion 300 et ne permettant donc pas son extraction.

De manière avantageusement complémentaire, le dispositif de liaison pourra être associé à des moyens de centrage des brides d'assemblage 102, 202 et des pions de verrouillage 300.

Ce recentrage pourra notamment s'effectuer en prévoyant une structure de bride d'assemblage 102, 202 présentant un épaulement périphérique formant un cône de centrage.

On peut également prévoir de manière alternative ou complémentaire la présence de doigts de recentrage, disposés par exemple en alternance avec les pions de verrouillage 300.

En utilisation, lorsque l'on souhaite refermer la section aval 100 d'une nacelle et la rattacher à un carter de soufflante 200, on procédera de la façon suivante.

La section aval 100 est refermée et pour ce faire est déplacée vers l'amont jusqu'à ce que les deux brides d'assemblage 102, 202 viennent en contact l'une contre l'autre.

Ce faisant, la bride d'assemblage 102 est traversée par les pions de verrouillage 300 au niveau de ses orifices correspondants 203. Par ailleurs, la bride de retenue 304 est en position de déverrouillage et les tiges 301 des pions de verrouillage 304 traversent également la bride de retenue 304 au niveau de l'ouverture 305 dans une zone de l'ouverture présentant une largeur suffisante pour permettre le passage de la tige 301.

Ainsi prêt à être verrouillé, le dispositif de liaison selon nl'invention peut être actionné.

Pour ce faire, la bride de retenue 304 est déplacée vers sa position de verrouillage. Ce faisant, relativement au pion de verrouillage 300, l'ouverture 305 se déplace et la zone de l'ouverture présentant la largeur suffisante pour permettre le passage de la tige ne se trouve plus au niveau de ladite tige 301 mais en est décalée, ladite tige 301 traversant alors, grâce à la présence de la gorge périphérique 302, une zone de l'ouverture 305 dont la largeur ne permet plus son extraction.

Pour déverrouiller le dispositif, on procédera à l'inverse, la zone de l'ouverture 305 permettant le passage de la tige 301 étant ramenée en regard dudit pion 300.

Dans un but d'aide à la fermeture, on pourra prévoir l'orifice 305 de la bride de retenue 304 présente une bordure d'épaisseur variable formant une rampe apte à forcer le rapprochement des brides d'assemblage 102, 202 lors du passage de la bride de retenue de sa position de déverrouillage à sa position de verrouillage.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

C'est ainsi que les préceptes de la présente invention pourraient être étendus à la liaison d'autres organes d'une nacelle de truboréacteur, telle que la liaison d'une entrée d'air monobloc (i.e. en forme de virole), ou d'un capot de soufflante, au carter de soufflante.

## Revendications

1. Dispositif de liaison notamment d'un cadre avant (101) d'une section aval (100) d'une nacelle de turboréacteur à un carter (200) de soufflante, comprenant
au moins un pion de verrouillage (300) relié à une première bride (102, 202) d'assemblage solidaire du cadre avant ou du carter de soufflante, ledit pion de verrouillage présentant une tige (301) conçue pour traverser de manière extractible un orifice (203) correspondant d'une deuxième bride (202, 102) d'assemblage solidaire du carter de soufflante ou du cadre avant,
**caractérisé en ce que** le dispositif de liaison comprend au moins une bride de retenue (304) montée mobile entre une position de verrouillage et une position de déverrouillage et présentant au moins une ouverture (305) destinée à être traversée par la tige du pion de verrouillage et à coopérer avec une gorge (302) périphérique d'extrémité dudit pion de verrouillage, ladite ouverture étant pour ce faire configurée de manière à ce que, lorsque la bride de retenue est en position de déverrouillage, l'ouverture présente au niveau du pion des dimensions supérieures à celles de la tige du pion permettant ainsi son extraction de la deuxième bride d'assemblage, et lorsque la bride de retenue est en position de verrouillage, ladite ouverture présente au niveau du pion des dimensions supérieures à l'épaisseur du pion au niveau de sa gorge périphérique mais inférieure à l'épaisseur globale de la tige au niveau de l'orifice de la deuxième bride, empêchant ainsi son extraction.

2. Dispositif selon la revendication 1, **caractérisé en ce que** le pion de verrouillage (300) est relié à la première bride (202) d'assemblage au moyen d'une queue de fixation traversant un orifice correspondant de la première bride et maintenue par un moyen de retenue de type écrou (306).

3. Dispositif selon la revendication 2, **caractérisé en ce que** l'orifice de la première bride (202) traversé par la queue de fixation du pion de verrouillage est équipé d'au moins une rondelle élastique (307) servant de moyen de prétensionnement.

4. Dispositif selon l'une quelconque des revendications 2 et 3, **caractérisé en ce que** la queue de fixation forme une tige (301) du pion (300) et **en ce que** le moyen de retenue est une bride de retenue (304) mobile conforme à la revendication 1.

5. Dispositif selon l'une quelconque des revendications 1 à 4, **caractérisé en ce qu'**il comprend une pluralité de pions de verrouillage (300) répartis sur la périphérie des brides d'assemblage (102, 202).

6. Dispositif selon la revendication 5, **caractérisé en ce qu'**au moins une bride d'assemblage (102, 202) est au moins partiellement annulaire.

7. Dispositif selon la revendication 6, **caractérisé en ce que** la bride de retenue (304) est au moins partiellement annulaire.

8. Dispositif selon l'une quelconque des revendications 1 à 7, **caractérisé en ce qu'**il comprend des moyens de centrage des brides d'assemblage (102, 202).

9. Dispositif selon l'une quelconque des revendications 1 à 8, **caractérisé en ce que** la bride de retenue (304) est associée à des moyens d'entraînement, notamment de type crémaillère et pignon.

10. Dispositif selon l'une quelconque des revendications 1 à 9, **caractérisé en ce que** l'orifice (305) de la bride de retenue (304) présente une bordure d'épaisseur variable formant au moins une rampe apte à forcer le rapprochement des brides d'assemblage (102, 202) lors du passage de la bride de retenue de sa position de déverrouillage à sa position de verrouillage.

11. Ensemble propulsif comprenant un turboréacteur logé à l'intérieur d'une nacelle, ladite nacelle comprenant une section aval (100) rattachée à un carter (200) de soufflante du turboréacteur à l'aide d'au moins un dispositif de liaison selon l'une quelconque des revendications 1 à 10.

## Patentansprüche

1. Vorrichtung zur Verbindung, insbesondere eines vorderen Rahmens (101) eines nachgelagerten Abschnitts (100) einer Gondel eines Triebwerks an ein Gebläsegehäuse (200), umfassend
mindestens einen Verriegelungsstift (300), verbunden mit einem ersten Verbindungsflansch (102, 202), der fest mit dem vorderen Rahmen oder mit dem Gebläsegehäuse verbunden ist, wobei der Verriegelungsstift einen Schaft (301) aufweist, der entworfen ist, um auf extrahierbare Weise eine Öffnung (203) zu queren, die einem zweiten Verbindungsflansch (202, 102) entspricht, der fest mit dem Gebläsegehäuse oder mit dem vorderen Rahmen verbunden ist,
**dadurch gekennzeichnet, dass** die Vorrichtung zur Verbindung mindestens einen Rückhalteflansch (304) umfasst, der beweglich zwischen einer Verriegelungsposition und einer Entriegelungsposition montiert ist und mindestens eine Öffnung (305) aufweist, die ausgelegt ist, vom Schaft des Verriegelungsstifts gequert zu werden und mit einer Umfangsauskehlung (302) des Endes des Verriegelungsstifts zusammenzuarbeiten, wobei die Öffnung dafür derart konfiguriert ist dass, wenn sich der Rückhalteflansch in der Verriegelungsposition befindet, die Öffnung auf der Ebene des Stifts Abmessungen aufweist, die größer als diejenigen des Schafts des Stifts sind, wodurch seine Extraktion aus dem zweiten Verbindungsflansch ermöglicht wird, und wenn sich der Rückhalteflansch in der Verriegelungsposition befindet, die Öffnung auf der Ebene des Stifts Abmessungen aufweist, die größer als die Dicke des Stifts auf der Ebene seiner Umfangsauskehlung sind, aber geringer als die gesamte Dicke des Schafts auf der Ebene der Öffnung des zweiten Flansches, wodurch seine Extraktion verhindert wird.

2. Vorrichtung nach Anspruch 1, **dadurch gekennzeichnet, dass** der Verriegelungsstift (300) mit dem ersten Verbindungsflansch (202) mit Hilfe eines Befestigungsschafts verbunden ist, der eine entsprechende Öffnung des ersten Flansches quert und von einem Rückhaltemittel vom Typ Schraubenmutter (306) gehalten wird.

3. Vorrichtung nach Anspruch 2, **dadurch gekennzeichnet, dass** die Öffnung des ersten Flansches (202), die vom Befestigungsschaft des Verriegelungsstifts gequert wird, mit mindestens einer elastischen Unterlegscheibe (307) ausgestattet ist, die als Vorspannungsmittel dient.

4. Vorrichtung nach einem der Ansprüche 2 und 3, **dadurch gekennzeichnet, dass** der Befestigungsschaft einen Schaft (301) des Stifts (300) bildet, und dadurch, dass das Rückhaltemittel ein beweglicher Rückhalteflansch (304) nach Anspruch 1 ist.

5. Vorrichtung nach einem der Ansprüche 1 bis 4, **dadurch gekennzeichnet, dass** sie eine Vielzahl von Verriegelungsstiften (300) umfasst, die auf dem Umfang der Verbindungsflansche (102, 202) verteilt sind.

6. Vorrichtung nach Anspruch 5, **dadurch gekennzeichnet, dass** mindestens ein Verbindungsflansch (102, 202) mindestens teilweise ringförmig ist.

7. Vorrichtung nach Anspruch 6, **dadurch gekennzeichnet, dass** der Rückhalteflansch (304) mindestens teilweise ringförmig ist.

8. Vorrichtung nach einem der Ansprüche 1 bis 7, **dadurch gekennzeichnet, dass** sie Mittel zur Zentrierung der Verbindungsflansche (102, 202) umfasst.

9. Vorrichtung nach einem der Ansprüche 1 bis 8, **dadurch gekennzeichnet, dass** der Rückhalteflansch (304) mit Antriebsmitteln assoziiert ist, insbesondere vom Typ Zahnstange und Ritzel.

10. Vorrichtung nach einem der Ansprüche 1 bis 9, **dadurch gekennzeichnet, dass** die Öffnung (305) des Rückhalteflansches (304) einen Rand mit einer variablen Dicke umfasst, der mindestens eine Rampe bildet, die ausgelegt ist, um die Annäherung der Verbindungsflansche (102, 202) beim Übergang des Rückhalteflansches aus einer Entriegelungsposition in seine Verriegelungsposition zu erzwingen.

11. Antriebseinheit, umfassend ein Triebwerk, das im Inneren einer Gondel aufgenommen ist, wobei die Gondel einen nachgelagerten Abschnitt (100) umfasst, der an ein Gebläsegehäuse (200) des Triebwerks mit Hilfe von mindestens einer Vorrichtung zur Verbindung nach einem der Ansprüche 1 bis 10 befestigt ist.

## Claims

1. A connecting device in particular of a front frame (101) of a downstream section (100) of a turbojet engine nacelle to a fan casing (200), comprising
at least one locking pin (300) connected to a first assembling flange (102, 202) secured to the front frame or to the fan casing, said locking pin having a rod (301) designed to removably pass through a corresponding orifice (203) of a second assembling flange (202, 102) secured to the fan casing or to the front frame,
**characterized in that** the connecting device comprises at least one retaining flange (304) movably mounted between a locking position and an unlocking position and having at least one opening (305) intended to be traversed by the rod of the locking pin and to cooperate with a peripheral end groove (302) of said locking pin, said opening being to this end configured so that, when the retaining flange is in the unlocking position, the opening has at the pin dimensions greater than those of the rod of the pin thereby allowing its extraction from the second assembling flange, and when the retaining flange is in the locking position, said opening has at the pin dimensions greater than the thickness of the pin at its peripheral groove but lower than the overall thickness of the rod at the orifice of the second flange, thus preventing its extraction.

2. The device according to claim 1, **characterized in that** the locking pin (300) is connected to the first assembling flange (202) by means of a fixing shank passing through a corresponding orifice of the first flange and maintained by a nut-type retaining means (306).

3. The device according to claim 2, **characterized in that** the orifice of the first flange (202) traversed by the fixing shank of the locking pin is equipped with at least one spring washer (307) serving as pretension means.

4. The device according to any one of claims 2 and 3, **characterized in that** the shank fixing shank forms a rod (301) of the pin (300) and **in that** the retaining means is a movable retaining flange (304) in accordance with claim 1.

5. The device according to any one of claims 1 to 4, **characterized in that** it comprises a plurality of locking pins (300) distributed over the periphery of the assembling flanges (102, 202).

6. The device according to claim 5, **characterized in that** at least one assembling flange (102, 202) is at least partially annular.

7. The device according to claim 6, **characterized in that** the retaining flange (304) is at least partially annular.

8. The device according to any one of claims 1 to 7, **characterized in that** it comprises centering means of the assembling flanges (102, 202).

9. The device according to any one of claims 1 to 8, **characterized in that** the retaining flange (304) is associated with driving means, in particular rack and pinion type driving means.

10. The device according to any one of claims 1 to 9, **characterized in that** the orifice (305) of the retaining flange (304) has an edging of variable thickness forming at least one ramp able to force the approximation of the assembling flanges (102, 202) during the passage of the retaining flange from its unlocking position to its locking position.

11. A propulsion assembly comprising a turbojet engine housed inside a nacelle, said nacelle comprising a downstream section (100) fastened to a fan casing (200) of the turbojet engine using at least one connecting device according to any one of claims 1 to 10.
